# EUROPEAN PATENT APPLICATION

(11) **EP 0 634 158 A1**
(43) Date of publication of application: **18.01.1995**
(21) Application number: 93902539.1
(22) Date of filing: 27.01.1993
(51) Int. Cl.: A61G 5/00

(54) **WHEELCHAIR FOR THE HANDICAPPED**

(71) Applicant: IURA, Tadashi, Ehime 791 (JP)
(72) Inventor: IURA, Tadashi, Ehime 791 (JP)
(74) Representative: VOSSIUS & PARTNER
(86) International application number: JP9300099
(87) International publication number: WO9416660

(57) **Abstract**

A wheelchair in which running wheels (4), (4) are provided on the sides of the body of the chair supporting a seat (40), and in which partitions (5) that can be folded down outwardly are provided on the sides of the seat. The running wheels are located clear of the folding down partitions, or the wheels can be moved so that they make way for the folding down partitions. This wheelchair, as with a conventional one, can freely be run by an occupant who rotates the running wheels by his/her own efforts or an attendant who pushes it at the handle thereof, and when getting on and/or off the wheelchair, the occupant can open a side of the seat by folding down a partition so that he/she can get on and/or off it sideways in an easy posture.

## Description

### FIELD OF THE INVENTION

The present invention relates to a wheelchair adapted for use by a physically handicapped or aged person.

### BACKGROUND OF THE INVENTION

A wheelchair used by a physically handicapped or aged person is generally provided with handles for an attendant in the rear of the body, and armrests on the both sided of the sect, so that the wheelchair may be moved by manually turning the travelling wheels on the outside. A charging type motor driven wheelchair in which the travelling wheels are motor-driven. The seat in any of these wheelchairs is fixed facing front, and a backrest is provided on the back.

The conventional wheelchair as described above had a wheel width not so wide and the rider got on and off from the front side, thus requiring the rider inevitably to move forward or back. The conventional wheelchair had therefore a problem in that it was very difficult and dangerous for a physically handicapped who was on a bed for most of his or her time to get on and off the wheelchair, requiring assistance of an attendant. The necessity of assistance of an attendant increases psychological burden on the rider and could cut down willingness to regain his or her health.

### DISCLOSURE OF THE INVENTION

The present invention has an object to enable a disabled person to get on and off a wheelchair by his or her own exertion as far as possible, and is therefore characterized in that, in a wheelchair provided with travelling wheels on the both sides of a body supporting a seat, a tiltable plate is provided outside each of the sides of the seat. This wheelchair can freely travel, as in a conventional wheelchair, by a person sitting down on the seat who turns the travelling wheels by his or her own exertion, or by an attendant who holds and pushes the handles. Upon getting on or off, a side of the seat can be opened for movement for getting on or off. This movement is therefore far easier than in the conventional wheelchair, enabling a physically handicapped person to get on or off without relying upon help of the other. It is necessary to provide the above-mentioned wheels at a position not hindering tilting of the tiltable plate. Where applicable, the travelling wheels may be provided at a position closer to the back under the seat, with a tiltable plate outside a side of the seat, and a driving wheel may be vertically movably provided for manual turning outside the tiltable plate, the driving wheel and the travelling wheel being connected with a transmission belt. Furthermore, the seat may be provided in a state inserted between the right and left travelling wheels, and may be made movable to a back position not hindering tilting of the tiltable plate.

### BRIEF DESCRIPTION OF THE DRAWINGS

Fig. 1 is a side view illustrating an embodiment of the present invention;
Fig. 2 is a side view illustrating a state in which an armrest member is opened;
Fig. 3 is a front view of an important portion thereof;
Fig. 4 is a descriptive view of operation;
Fig. 5 is another descriptive view of operation;
Fig. 6 is a right side view illustrating another embodiment;
Fig. 7 is a side view of an important portion thereof;
Fig. 8 is a back view of an important portion thereof;
Fig. 9 is a partially cutaway back view;
Fig. 10 is a side view illustrating a state of vertical movement;
Fig. 11 is a descriptive view of operation;
Fig. 12 is a side view illustrating further another embodiment;
Fig. 13 is a partially cutaway front view;
Fig. 14 is a plan view of an important portion thereof;
Fig. 15 is a side view of an important portion thereof;
Fig. 16 is a side view illustrating a state in which the rear wheels thereof are moved;
Fig. 17 is a schematic back view illustrating a state in which the tiltable plate is tilted; and
Fig. 18 is a back view of an important portion thereof illustrating operation.

### PREFERRED EMBODIMENTS OF THE INVENTION

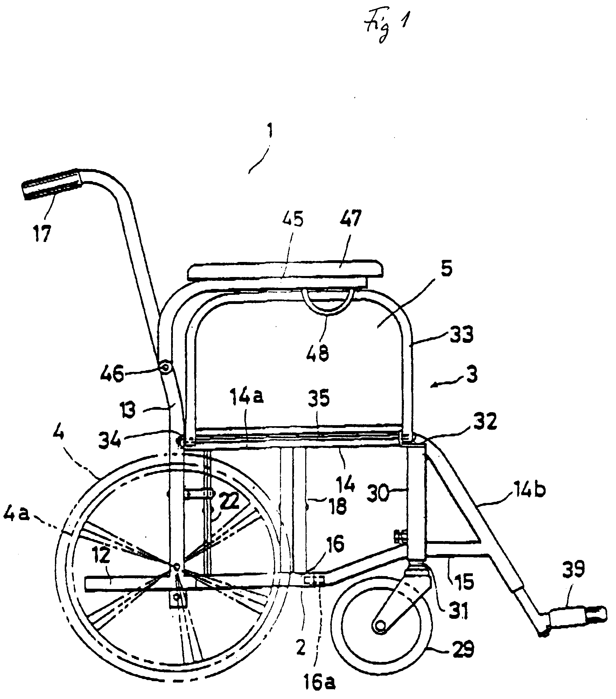

The embodiments shown in the drawings are described below. Fig. 1 and the subsequent drawings illustrate embodiments of the present invention. In this wheelchair 1, a seat space 3 is provided at the center of a frame constituting a body, and travelling wheels 4 and 4 are provided at sa position closer to the back under the both sides thereof. The seat space 3 is provided with a seat having tiltable plates 5 on the both sides.

A frame 2 is symmetrically configured, being separated into a pair of a right and a left parts. A rear pipe 12 directed forward and backward is provided under and to the back of the frame 2, and the base of a handle frame 13 directed upward and backward is secured to this rear pipe 12. The base of a horizontal portion 14a of a chair frame 14 is secured to the middle portion in the vertical direction of this handle frame 13, and a slope 14b directed toward front down is provided at the front end of this horizontal portion 14a. A front pipe 15 is driven into the back of this slope 14b, and the rear end portion of the front pipe and the front end portion of the rear pipe 12 are connected by a rotating frame 16 rotating by the action of a pin inserted through the both pipes. A handle 17 is provided at the top of the handle frame 13.

The right and left frames 2 and 2 are connected together with an X-shaped link frame 18. This link frame 18 comprises a pair of links 19 and 20 supported by a pin at the middle point of horizontal overlap. The bottoms of these links are secured to the rotating frame 16, and the tops thereof are connected to the pipe 21 rotatably attached by the pin fixed to the horizontal portion 14a of the chair frame 14. A set link 22 is provided on the back of this link frame 18. The set link 22 is provided in the same manner as the link frame 18 with plate-shaped links 23 and 24 horizontally overlapping in an X shape. Set holes 23a and 24a are provided respectively in the links 23 and 24, and sat holes 25a and 26a are provided respectively in arms 25 and 26 rotatably connected to the handle frames 13 and 13. In a state in which the right and left framed 2 and 2 are spaced apart from each other to the both sides at a distance corresponding to the sitting width, the right and left frames 2 and 2 can be set in a stable state free form expansion or contraction by connecting the holes 23a and 25a and holes 24a and 26a with pins 27 and 28.

A bracket 32 provided outside the chair frame 14 and a vertical pipe 30 outside the front pipe 15 are secured, and a supporting shaft 31 of the variable-direction caster-type front wheels 29 forming a pair of right and left wheels is vertically adjustably attached to the bottom of this pipe. A pair of right and left footstools 39 and 39 are provided at the lower end of the slope 14b. A frame 33 of the tiltable plate 5 located on a side of the seat is provided so as to be tiltable toward outside by a pin 35 provided between the bracket 34 fixed to the handle frame 13 and the bracket 32 attached with the pipe 30.

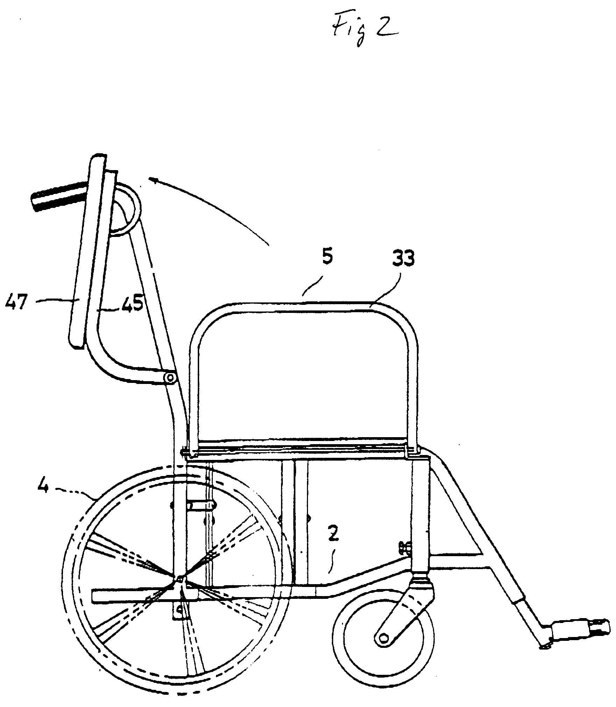

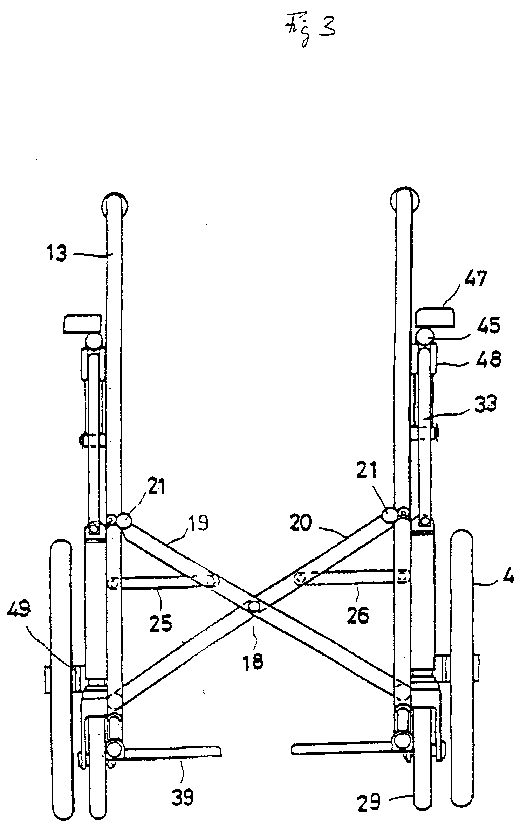

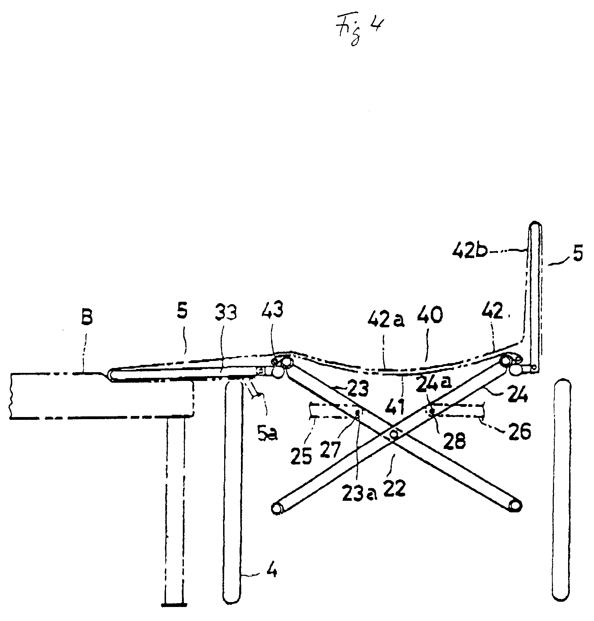

A seat 40 provided in the above-mentioned sitting space comprises a seat recipient 41 and a chair body 42. The seat recipient 41 is made of cloth or a plurality of ropes, and the right and left side ends are attached to levers 43 and 43 directed toward front and back attached to the horizontal portions 24a and 14a of the right and left chair frames 14 and 14. The chair body 42 is formed of a flexible sheet, and comprises a sitting portion 42a received by the seat recipient 41, and side portions 42b and 42b covering the tiltable plate frame 33. The tilting plate 5 is composed of the tiltable plate frame 33 and the side portion 42b by forming the outside of the side portion 42b into a bag shape and wrapping the tiltable plate frames 33 and 33 in this bag. When tilting the tiltable plate 5, therefore, this side portion 42b can be tilted outside together with the tiltable plate frame 33 along with the rotation outside thereof. A pair of right and left armrest frames 45 lapping over the tiltable plate frame 33 are vertically rotatably attached by a pin 46 at the vertically middle portion of the handle frame 13. An arm support 47 is attached to the upper surface of this armrest frame 45, and a pair of curved fixing members 48 and 48 which are fixed in the upright state with the tiltable plate frame 33 in between are provided on the bottom surface side at the leading end portion thereof. As the tiltable plate fixing means for fixing the tiltable plate 5 in the upright state thereof, any other appropriate means including screw-tightening may be adopted, apart from the curved fixing member as shown in the drawing. While the tiltable plate 5 is tiltable by 180° in the embodiment shown, a recipient 5a supporting the tiltable plate 5 in substantially a horizontal state may be provided in the frame 2, as shown in Fig. 4, where applicable.

The shaft of the travelling wheel 4 is bearing-supported by a bearing 49 attached near the bottom end of the handle frame 13. An outer wheel 4a for manual pushing is integrally provided on the outside of the wheel 4. A person sitting down on the seat can cause the wheelchair to freely run forward and back by manually turning this outer wheel 4a.

This wheelchair 1 serves for normal riding in a state in which, as shown in Fig. 1, the tiltable plate 5 is made upright, and the tiltable plate frame 33 is fixed by the curved fixing members 48 and 48 by placing the armrest frame 45 over the tiltable plate frame 33. The rider sitting down on the seat can move to a desired plate by turning the outer wheels 4a by hands, as the travelling wheels 4 rotate on the floor surface.

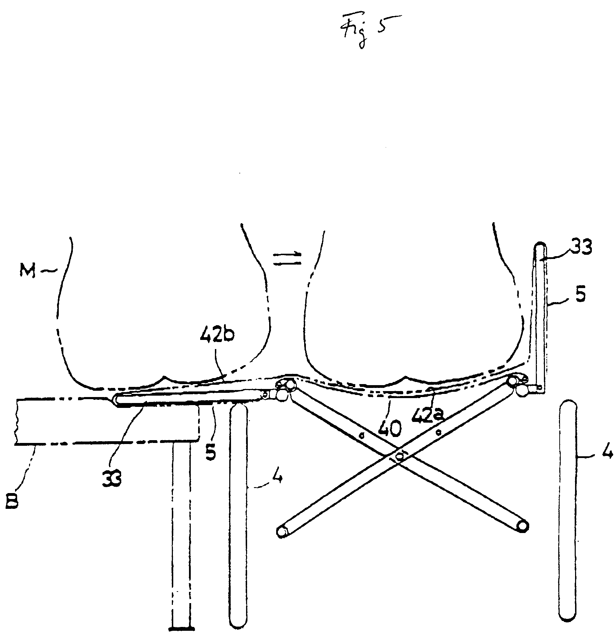

Then, when a person M lying on a bed B transfers to this wheelchair, the rider releases constraint of the tiltable plate frame 33 by pushing up the armrest frame 45 of the wheelchair brought closer along the bed (see Fig. 2), as shown in Fig. 5, tilts outside the tiltable plate 5, and places the tilted plate on the bed. In this state, the person on the bed transversely moves on the side portion 42b of the sheet covering the tiltable plate frame 33 to sit down in the sitting portion 42a of the seat 40, and then, makes the tiltable plate 5 upright to fix the tiltable plate frame 33 with the curved fixing member 48 of the armrest frame. When a person on this wheelchair transfers to a bed, also, transfer can be easily accomplished by tilting the tiltable plate and opening the side portion of the seat in a similar manner. The wheelchair of this embodiment, constructed symmetrically to the right and left, is convenient for getting on and off freely from any of the right and left sides, but only a side may be made capable of being opened and closed, where applicable.

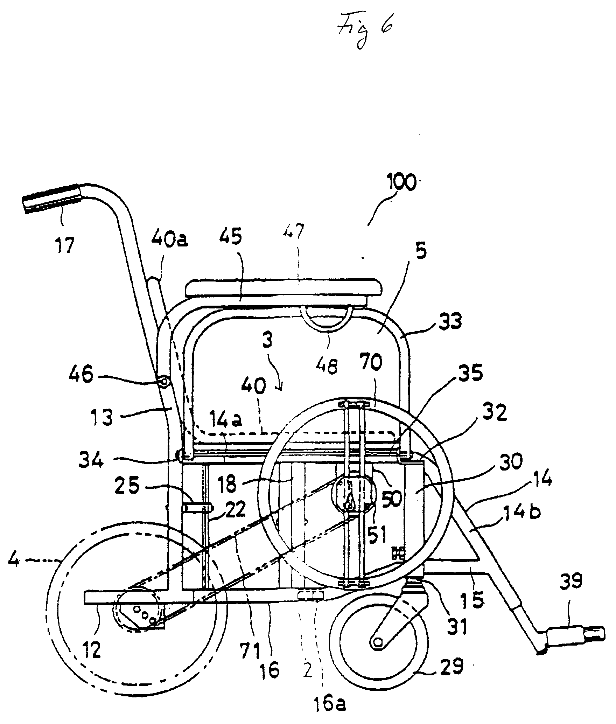

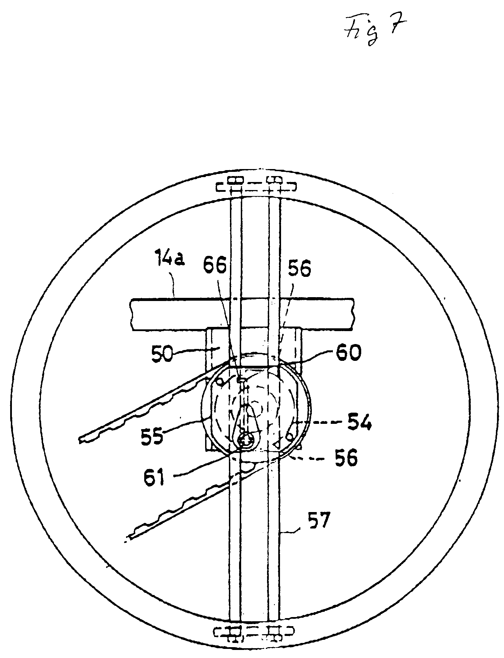

Now, Fig. 6 represents another embodiment, where the same reference numerals are assigned to the corresponding parts as in the first embodiment as described above. In this wheelchair 100, a seat space 3 is provided at the center of a frame 2 constituting the body, and travelling wheels 4 and 4 are provided at positions under the right and left sides closer to the back. A driving wheel 70 for manually rotating the wheel is attached at a position above and in front of the travelling wheel, and this driving wheel 70 and the travelling wheel 4 are connected with a transmission belt 71.

A bracket 50 directed downward is secured to a horizontal portion 14a of the chair frame 14, and a pulley 51 is rotatably supported by a shaft 52. A hollow boss 55 having staged recesses 53 and 54 and covered by a cover 58 is provided integrally on the pulley 51, and two parallel shafts 57 and 57 are slidably inserted into throughholes 56 and ··· provided in this boss 55. The both ends of these shafts 57 and 57 are fixed to the driving wheel 70. Accordingly, rotation of the driving wheel 70 is transmitted through a belt 7 to the travelling wheel 4. A hook 60 is rotatably attached by a pin 61 to a large-diameter hollow portion 54 of the boss 55, and a knob 62 is attached to an outer end of this pin 61. A hole 66 engaging with the above-mentioned hook is provided in one of the shafts 57, so that the leading end of the hook 60 can be brought into engagement with, and released from, this hole 66 by acting on the knob 62. Engagement of the hook 60 with the hole 66 of the shaft 57 leads to fixing of the shaft 57 and the pulley 51, and the driving wheel 70 is fixed and held at this position. Disengagement of the hook 60 results in possibility of vertically moving the driving wheel 70 by causing sliding of the shafts 57 and 57.

As shown in Fig. 6, this wheelchair 100 serves for usual riding by causing the tiltable plate frame 33 to stand upright, placing the armrest member 45 over the tiltable plate frame 33, fixing the tiltable plate frame 33 with the curved fixing members 48 and 48, and fixing the driving wheel 70 to the pulley 51 with the hook 60 at the uppermost position thereof. When a rider sitting down on the seat turns by hands the right and left driving wheels 70 and 70, this rotation is transmitted through the belt 7 to the travelling wheels 4 and 4, and the travelling wheels rotates on the floor surface, thus permitting movement of the rider to a desired place.

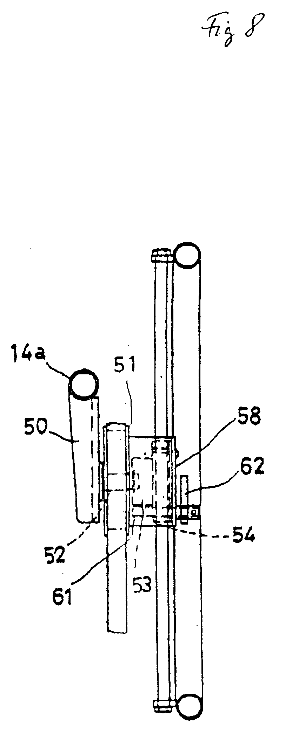

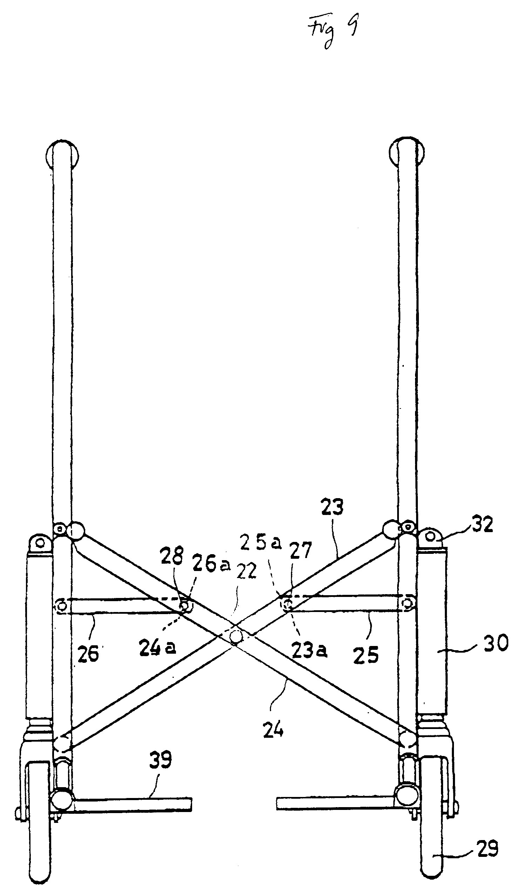

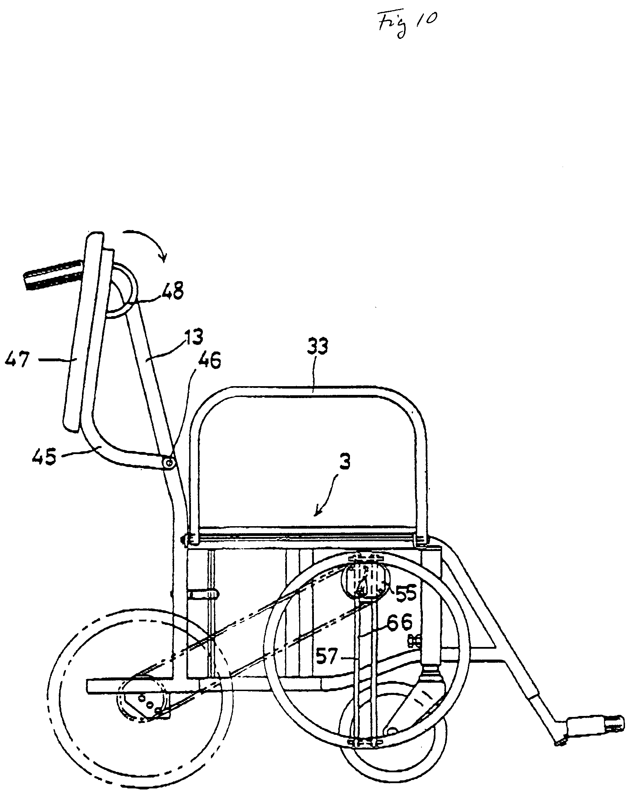

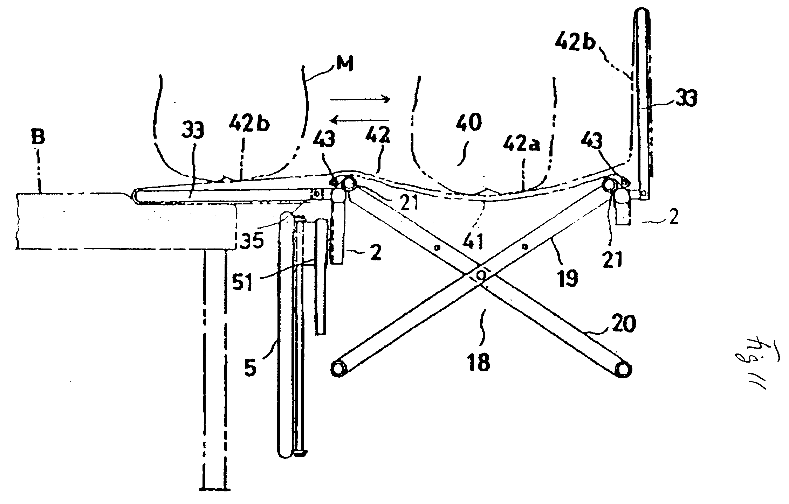

Then, when a person M on a bed B transfers to this wheelchair 1, as shown in Figs. 10 and 11, the wheelchair is brought near the bed along the side thereof. The hook 60 of the wheelchair is disengaged from the hole 66 to slide the driving wheel downward, and the armrest member 45 is lifted up to tilt the tiltable plate frame 33 and placed on the bed as shown in Fig. 6. Thus, the driving wheel. 70 can be moved sufficiently downward so that the tiltable plate frame 33 may become substantially horizontal. In this state, the person on the bed transversely moves on the side portion 42b of the sheet which covers the tiltable plate frame 33, sits down on the sitting portion 42a of the seat 40, then stands the tiltable plate frame 33 to fix same with the curved fixing member of the armrest member, and at the same time, lifts up the driving wheel 70 to fix it to the pulley with the hook 60. When transferring from the wheelchair to the bed, transfer operation can be easily accomplished by opening the side of the seat in the same manner as described above.

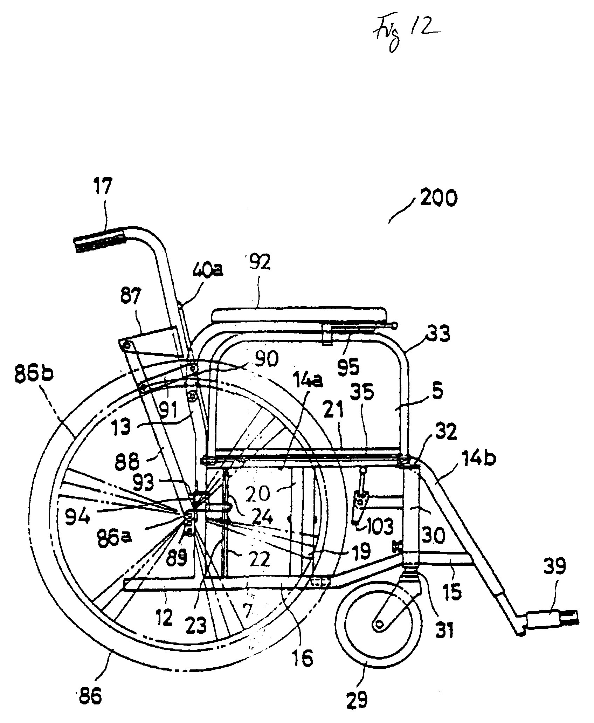

Fig. 12 and the subsequent drawings represent further another embodiment. In this embodiment, the rear wheels 86 and 86 are provided so as to be capable of moving backward not to hinder tilting of the tiltable plate. More specifically, the rolling rear wheel 86 can be manually driven. A bracket 87 is secured to the handle frame 13. The base of a wheel supporting arm 88 is rotatably attached to this bracket 87. A plurality of shaft securing holes 89, 89 ··· are provided on the bottom side of the wheel supporting arm 88 to permit vertical adjustment of a shaft 86a. The above-mentioned wheel supporting arm 88 is shaft-connected with an arm 90 shaft-connected to the handle frame 13, which is rotatable forward and backward, with an interlocking lever 91 so as to permit forward and backward movement of the wheel supporting arm 88. In the drawing, 86b is a manual operating ring. In this embodiment, the arm 90 serves also as a supporting lever of the chair arm frame 92 by bending the top potion thereof toward the front. The reference numeral 93 is a projection for preventing transverse swing, which is secured to the wheel supporting arm 88, and releasably provided in the hole of a perforated plate 94 secured to the handle frame 13.

Also in the drawing, 95 is a locking device, which is formed by providing a locking claw 95a capable of engaging and disengaging a pipe frame 33a surrounding the outer circumstance of the tiltable plate frame 33 on the leading end side of a locking arm rotatably attached to the right and left sides of the supporting lever 90a of the chair arm frame 92; 97 is a spring 37 elastically supporting always in the direction of engagement; and 103 is a manual wheel brake capable of braking rotation through contact with the rear wheel.

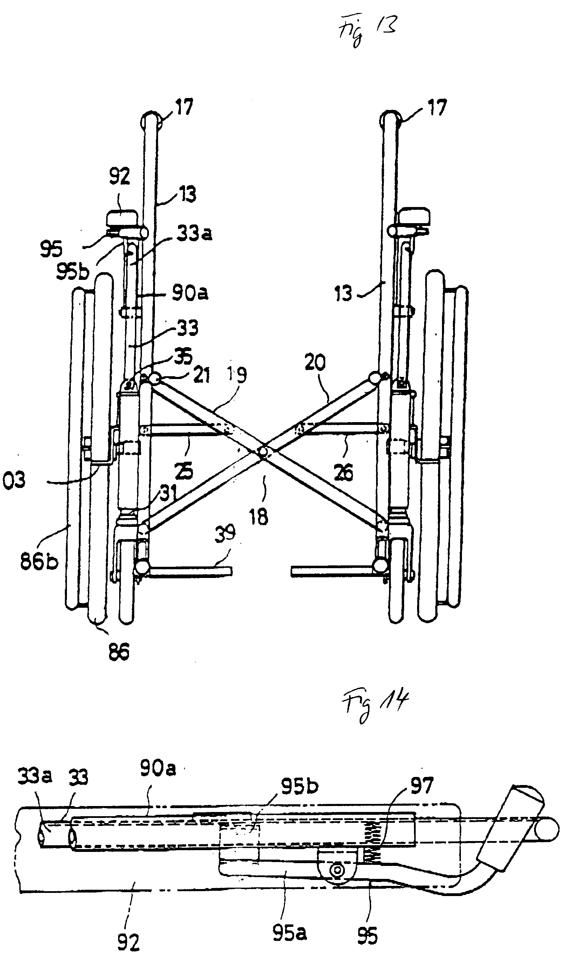

Now, the functions of this embodiment is described. During running on the wheelchair, as shown in Fig. 12, the right and left frames 2 and 2 are spaced apart into a state permitting sitting down on the seat, and the set link 22 is fixed with arms 25 and 26. At this point, the seat 40 is situated between the right and left rear wheels 86 and 86 and have the right and left tiltable plates 5 upright on the both sides of the chair sitting portion. The side portions are formed on the inner surfaces of these tiltable plates 5. The tiltable plate frame 33 is in a locked state by the locking device 95, and an arm frame 92 is formed above the tiltable plate frame 33. The frame portion, in a front view, is fixed in the state shown in Fig. 13. A disabled person can therefore drive the wheelchair independently by manually rotating the manual operating ring 86b in the same manner as in the case he or she rides an ordinary wheelchair. When an attendant assists driving, pushing and pulling the handle 7 permit forward and backward travelling.

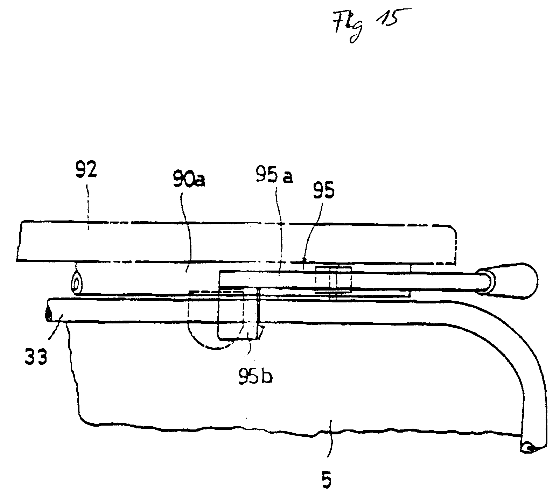

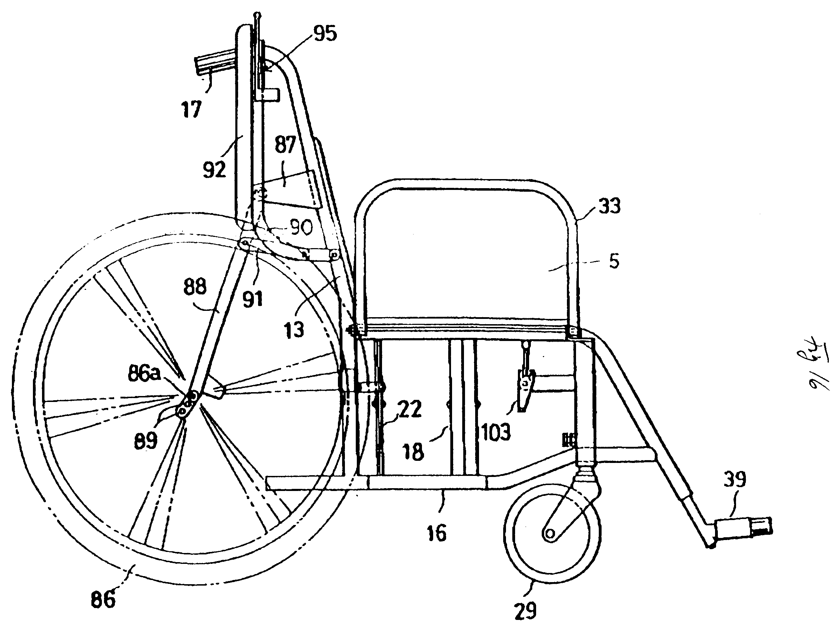

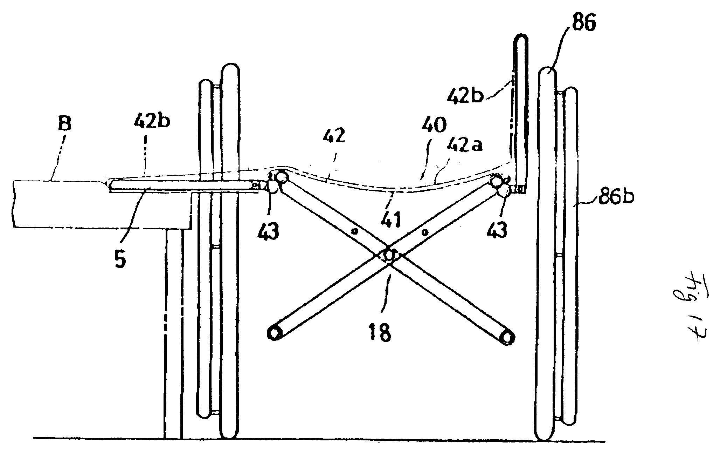

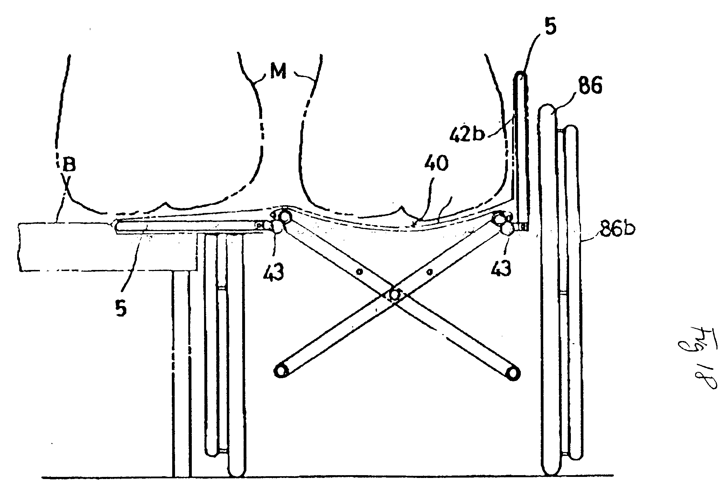

When returning from this running to a bed, the wheelchair of the present invention displays a remarkable effect. More specifically, the physically handicapped or the attendant brings the wheelchair into contact with a side of the bed, releases the lock on the bed side to move the rear wheel 86 on this side backward. Since the rear wheel 86 is supported by a rotatable wheel supporting arm 88, it is easy to move the wheel backward. Because, in this embodiment, the supporting lever 90a of the arm frame 92 is formed integrally with the arm 90, and attached to the wheel supporting arm 88 with the locking lever 91, the chair arm frame 92 is lifted up backward along with the movement of the rear wheel 86 as shown in Fig. 16, and does not hinder outside rotation of the tiltable plate 5.

In this state in which the rear wheel 86 and the chair arm frame 92 are prevented from hindering rotation of the tiltable plate 5, the tiltable plate 5 is rotated toward the bed B side and tilted. The bed B is caused to support this tiltable plate 5 to form a bridge between the wheelchair and the bed. That is, the side portion 42b of the seat 40 is installed continuously with the chair sitting portion 40a on the upper surface of the tiltable plate 5, and the physically handicapped S can easily transfer to the bed B side by sliding the side portion 42b on the tiltable plate 5.

When transferring from the bed to the wheelchair, in contrast, it suffices to use the above-mentioned steps in the reverse order. As compared with the conventional practice in which it was necessary to get on or off from the front of the wheelchair, the present invention provides a very convenient practice of getting on or off from the side, and of transferring safely between the bed and the wheelchair without assistance of an attendant.

### INDUSTRIALLY USEFUL EFFECTS

The wheelchair of the present invention is convenient as a wheelchair used by a physically handicapped or aged person.

## Claims

1. A wheelchair which comprises travelling wheels on the both sides of a body supporting a seat, wherein: a tiltable plate is provided outside the side of said seat.

2. A wheelchair as claimed in Claim 1, wherein said travelling wheels are under the seat closer to the back; a tiltable plate is provided outside a side of the seat; a driving wheel manually rotatable is vertically movably provided outside said tiltable plate; and said driving wheel and said travelling wheel are connected with a transmission belt.

3. A wheelchair as claimed in Claim 1, wherein: the seat is provided in a state inserted between the right and left travelling wheels, movably to a position closer to the back not hindering rotation of said tiltable plate in rotation thereof.
